# FASCICULE DE BREVET EUROPEEN

(11) **EP 0 974 942 B1**
(45) Date de publication et mention de la délivrance du brevet: **20.09.2006**
(21) Numéro de dépôt: 99401786.1
(22) Date de dépôt: 16.07.1999
(51) Int. Cl.: G07F 17/30, H04N 5/445

(54) **Télécommande pour juke-box audiovisuel**
Fernbedienung für audiovisuelle Musikbox
Remote control for audiovisual jukebox

(30) Priorité: 22.07.1998 FR 9809351
(43) Date de publication de la demande: 26.01.2000
(73) Titulaire: TOUCHTUNES MUSIC CORPORATION, Las Vegas, NV 89104 (US)
(72) Inventeur: Nathan, Guy, 91330 Yerres (FR)
(74) Mandataire: Debay, Yves

(56) Documents cités:
- WO-A-96/12257
- WO-A-98/07940
- US-A- 5 077 607

## Description

La présente invention concerne l'utilisation d'une télécommande pour système de reproduction audiovisuelle numérique intelligent appelé également juke-box. L'invention concerne plus particulièrement une installation de reproduction audiovisuelle numérique, dans laquelle une pluralité de juke-boxes peuvent être contrôlées par des télécommandes.

Il est connu dans l'art antérieur des systèmes de télécommande utilisant la technologie infrarouge pour commander un appareil. Ces systèmes comprennent un émetteur situé sur la télécommande et un récepteur situé sur l'appareil. L'utilisation des infrarouges nécessite de diriger l'émetteur de la télécommande vers le récepteur de l'appareil.

WO-A-9 807 940 décrit un processus d'apprentissage du code d'identification d'une telecommande par un recepteur.

La présente invention a donc pour objet de pallier les inconvénients de l'art antérieur en proposant une installation avec juke-boxes utilisant chacun une télécommande d'utilisation facile et sécurisée.

Ce but est atteint par une installation de reproduction audiovisuelle numérique, comprenant une pluralité de juke-boxes, dans lequel chaque juke-box comporte un microprocesseur, des moyens pour stocker des informations audiovisuelles pouvant être reproduites par le juke-box en réponse à des requêtes d'utilisateur, un système audio pour produire des sons, un système vidéo pour afficher images vidéo, et un système de communication permettant au juke-box de communiquer avec un réseau de distribution d'informations audiovisuelles contrôlé par un serveur distant, le serveur et le juke-box communiquant l'un avec l'autre via le réseau de distribution, le serveur fournissant des services au juke-box, caractérisée en ce que le système de reproduction audiovisuelle comprend une pluralité de télécommandes pour contrôleur chacune une pluralité de fonctions d'un juke-box, chacune des télécommandes comprenant un émetteur distant de radiofréquence associé à un récepteur de radiofréquence connecté à un circuit de commande du son d'un juke-box et étant agencée pour contrôler un des juke-boxes uniquement lorsque le juke-box reconnaît un code de contrôle incluant un code d'identification transmis par la télécommande et en ce que au moins un juke-box est agencé pour stocker le code d'identification et utiliser ce dernier lors d'une comparaison, faite avec le code d'identification inclus dans un code de contrôle transmis par la télécommande ou le serveur via le réseau de distribution, pour déterminer si le juke-box va répondre ou non aux codes de contrôle émis par la télécommande, la télécommande comprenant une touche spécifique qui déclenche, lorsqu'elle est activée, un signal comprenant uniquement le code d'identification pour permettre au juke-box de stocker facilement le code d'identification lors de la première utilisation de la télécommande, chacun des juke- boxs étant doté d'un mode d'apprentissage prévu pour permettre d'une part la reconnaissance du Code d'identification émis par une télécommande lorsque la touche spécifique est activée, et d'autre part le stockage de ce code d'identification par le juke-box.

Selon une autre particularité, au moins un système de reproduction audiovisuelle reçoit, par l'intermédiaire du serveur central relié au système de reproduction, le code de la télécommande.

Selon une autre particularité, une fonction de la télécommande est de neutraliser ou de mettre en service le système de reproduction audiovisuelle et ses moyens de paiement

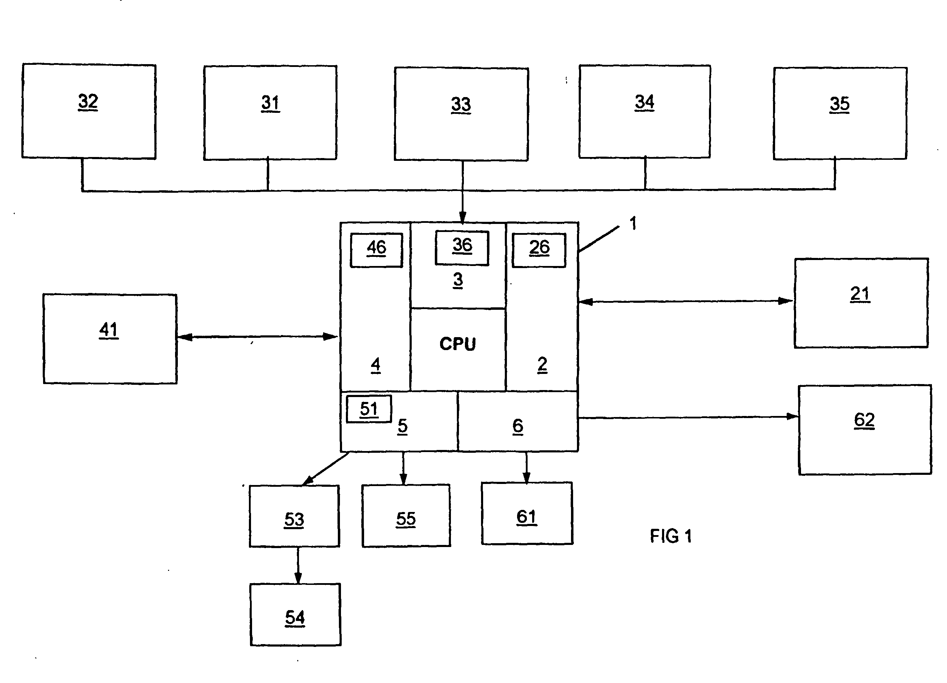

La figure unique représente le système de reproduction audiovisuelle décrit dans la demande de brevet internationale WO 96/12257. De préférence, mais de manière non limitative, ce système de reproduction audiovisuelle utilise les éléments matériels énumérés et référencés ci-après.

L'unité centrale (1) à microprocesseur est un système compatible PC de haute performance. Le choix, lors de la mise en oeuvre, s'est porté sur un système du type Intel pentium qui possède des moyens de mémorisation et au moins les caractéristiques suivantes :
- compatibilité avec le bus local Vesa,
- antémémoire du processeur: 256 kO,
- mémoire vive: RAM de 32 MO
- ports série et parallèle de haute performance,
- adaptateur graphique type SVGA à microprocesseur
- contrôleur de bus type SCSI/2,
- mémoire vive RAM statique auto-alimentée.

Toute autre unité centrale possédant des performances équivalentes ou supérieures pourra être utilisée dans l'invention.

Cette unité centrale commande et gère un circuit de commande de son (5), un circuit (4) de commande des télécommunications, un circuit (3) de commande des entrées, un circuit (2) de commande de la mémorisation de masse, un circuit (6) de commande des moyens de visualisation. Les moyens de visualisation se composent principalement d'un moniteur vidéo (62) à écran plat sans entrelacement, de type SVGA à haute résolution et faible rayonnement. C'est ce moniteur qui est utilisé pour la reproduction d'images (par exemple les couvertures d'albums des sélections musicales), de graphiques ou de clips vidéo.

Faisant partie également des moyens de mémorisation, des modules de stockage (21) utilisant des disques durs de type SCSI haute vitesse et haute capacité, sont associés aux moyens de mémorisation déjà présents dans le dispositif à microprocesseur. Ces modules servent au stockage d'informations audiovisuelles.

Un adaptateur de modem de télécommunication (41) haute vitesse 28,8 kbps est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur -tuner (53) relié au circuit électronique (5) de type synthétiseur de musique prévu pour supporter un grand nombre de sources d'entrée tout en fournissant une sortie présentant une qualité de type CD (disque compact), telle que, par exemple, l'adaptateur audio multimédia à microprocesseur, du type carte son.

Le système de reproduction audiovisuelle gère, par le biais de son circuit contrôleur d'entrée (3), un écran tactile (33) incluant un panneau de revêtement de la vitre utilisant la "technologie avancée d'onde de surface" ainsi qu'un contrôleur de bus de type AT. Cet écran tactile permet de déclencher l'affichage sur le moniteur vidéo (62) ou l'écran d'un téléviseur (61), de diverses informations de sélection utilisées par les clients, ainsi que des informations de commande et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

Le circuit d'entrée (3) interface gère également un ensemble télécommande (31).

Un dispositif de paiement de redevances (35) est également relié au circuit d'interface d'entrée (3). Il est également possible d'utiliser tout autre dispositif qui permette la réception de tout mode de paiement par pièces, billets, jetons, cartes magnétiques à puces ou combinaison de moyens de paiement.

Le système est logé dans un châssis ou bâti en acier.

Outre ces éléments, un microphone (55) sans fil est relié au contrôleur de son (5), ce qui permet de transformer ce dernier en un puissant système d'annonces et d'informations destinées au public ou éventuellement en machine de karaoké. De même, un système de haut-parleurs sans fil peut être utilisé par le système.

L'ensemble (31) de commande à distance permet au gérant, par exemple, de derrière le bar, d'accéder et de contrôler différentes commandes telles que :
- la commande marche/arrêt du microphone,
- la commande de mise en sourdine des haut-parleurs,
- la commande de contrôle du volume sonore,
- la commande d'annulation de la sélection musicale en train d'être écoutée.

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit d'opérations réalisées sur les moyens de visualisation et sur les moyens de reproduction sonore de même que la gestion des liaisons de télécommunication au travers du réseau de distribution. De plus, ce logiciel présente une grande flexibilité.

Les données audiovisuelles numérisées et compressées sont stockées dans les moyens de mémorisation (21).

La librairie d'outils et de services comprend, notamment, un premier module, référencé SSM, correspondant au module de démarrage du système. Ce module ne fournit qu'un seul service. Par conséquent, il se charge automatiquement au moment de la mise sous tension du système. Si le système est démarré avec un numéro d'enregistrement correct, il rentre alors directement dans le mode "en service" du module référencé RMM.

Le module RMM est le module du mode "en service", qui est le mode de fonctionnement dans lequel le système entre dès que son numéro d'enregistrement est validé. Dans ce mode, le système est prêt pour manipuler toute requête qui peut être déclenchée par différents événements prédéfinis, comme par exemple :
- des clients qui touchent l'écran : lorsqu'un client ou un utilisateur touche l'écran, le système transfère le contrôle de sa session de premier plan au module CBSM du mode de sélection et d'exploration client,
- des requêtes d'appel serveur du réseau de télécommunication : lorsque le système détecte une boucle sur la ligne téléphonique, il émet une procédure asynchrone d'arrière-plan : le mode de services télécom du module TSM,
- la réception d'un signal de télécommande : quand une commande est reçue, elle est traitée dans une session d'arrière-plan par le module SMM de commande système alors que la session de premier plan reste disponible pour d'autres interventions,

Le système reste dans le mode "en service" jusqu'à ce que l'un des événements décrits ci-avant se produise.

Le module SMM est le module de commande système. Ce module permet de réaliser des fonctions qui commandent au système d'accepter une entrée demandée par un dispositif de télécommande, ces fonctions étant instantanément traitées sans que le processus en train de se dérouler ne soit arrêté. Un très grand nombre de telles fonctions est possible. Seules quelques-unes sont, de manière non limitative, ci-dessous listées:
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande d'effets panoramiques, zoom avant, zoom arrière,
- déclenchement d'une remise à zéro du programme logiciel.

Le module TSM est le module de mode de services de télécommunication entre le serveur central et le système de reproduction audiovisuelle. Ce module permet de gérer tous les services de gestion disponibles sur le réseau de distribution. Toutes les tâches propres aux télécommunications sont gérées comme des tâches d'arrière-plan du système. Ces tâches n'utilisent toujours que les parties de temps de traitement restant, une fois que le système a achevé toutes ses tâches de premier plan. Ainsi, lorsque le système est occupé avec l'une de ses tâches de plus haute priorité, les tâches de télécommunication, automatiquement, vont s'efforcer de diminuer les contraintes sur les ressources du système et récupérer tout temps de traitement du microprocesseur laissé disponible.

La télécommande constitue l'ensemble de commandes à distance du système de reproduction audiovisuelle. La télécommande est une télécommande utilisant un émetteur de radiofréquences. Le système de reproduction comprend un récepteur de radiofréquences situé avantageusement sur le circuit (5) de commande de son. Avantageusement, la télécommande comprend des moyens de fixation, permettant de la solidariser à un élément, par exemple, le bar, qui n'est pas nécessairement dirigé vers le système de reproduction. En effet, l'utilisation des radiofréquences ne nécessite pas de diriger l'émetteur vers le récepteur. Cette caractéristique évite donc toute détérioration due à des manipulations pour diriger la télécommande vers le système de reproduction audiovisuelle.

Afin d'individualiser un système audiovisuel à une télécommande particulière, celle-ci possède un code. Ce code qui correspond à une adresse, est formé par une barrette de micro-interrupteur (DIP Switch). Lors de l'utilisation de la télécommande, celle-ci émet dans son signal une première information correspondant à son code et une seconde information correspondant au code de la touche qui a été utilisée. Le code d'identification de la télécommande est mémorisé par le système de reproduction audiovisuelle lors de la première utilisation de la télécommande selon un procédé d'apprentissage particulier. Ce procédé comprend plusieurs étapes.

Dans une première étape, le système de reproduction audiovisuelle est placé en mode apprentissage. Ce mode d'apprentissage correspond à l'exécution d'une sous routine de la librairie d'outils et de services du système d'exploitation du système de reproduction. Cette procédure est déclenchée par l'effleurement d'un bouton spécifique matérialisé sur l'écran par les moyens de visualisation. Lorsque le système d'exploitation est dans ce mode, il est prêt à recevoir le code d'une télécommande pour permettre au système de reproduction de ne réagir, par la suite pour certaines opérations, que par l'actionnement de la télécommande. La télécommande comprend une touche spécifique déclenchant l'émission d'un signal comportant le code mémorisé dans sa mémoire.

Dans une étape d'utilisation de la télécommande, celle-ci va émettre, dans son signal, son code d'identification.

Dans une autre étape, le système de reproduction audiovisuelle mémorise, dans ses moyens de mémorisation, le code d'identification de la télécommande. Le mode d'apprentissage du système de reproduction permet à celui-ci de reconnaître, dans le signal émis par la télécommande, le code de celle-ci et de le mémoriser. A l'issue de cette étape, le système de reproduction se replace en mode " en service ". Ainsi, grâce à ce mode particulier d'apprentissage, il n'est pas nécessaire de préprogrammer le code de la télécommande dans le système de reproduction audiovisuelle. De plus, une fois le code d'une télécommande mémorisé par un système de reproduction, à chaque utilisation ultérieure de la télécommande, le système d'exploitation effectue une vérification du code d'identification de la télécommande qui vient d'émettre son signal, avec le code mémorisé. Si les deux codes sont identiques, la fonction correspondant au code de la touche enfoncée sera exécutée. Dans le cas contraire, il n'y aura pas d'effet.

Avantageusement, le code de la télécommande est mémorisé dans un circuit intégré (I Button) alimenté électriquement uniquement lorsqu'une opération est effectuée, et est capable de stocker l'information série dans une mémoire non volatile.

Avantageusement, un deuxième code d'une deuxième télécommande est mémorisé par un système de reproduction audiovisuelle. Ce deuxième code peut être transmis à chaque système de reproduction audiovisuelle, par l'intermédiaire du serveur central et du réseau de distribution auquel est connecté le système de reproduction audiovisuelle, via son modem (41) de télécommunication.

La télécommande permet, grâce à des touches particulières et à des fonctions gérées par le module SMM, d'effectuer certaines actions sur le système de reproduction audiovisuelle. Une première fonction, effectuée par l'intermédiaire d'une touche de la télécommande, est de neutraliser le système de reproduction, ainsi que ses moyens de paiement. Cette neutralisation empêche toute introduction d'un moyen de paiement quelconque (jetons, pièces, billets, carte magnétique à puces,...). Avantageusement, l'écran de visualisation du système de reproduction audiovisuelle affiche pendant la durée de la neutralisation un message informant, par exemple, l'utilisateur, que le système de reproduction audiovisuelle est indisponible. Avantageusement, le message peut être personnalisé par le locataire du système de reproduction audiovisuelle. La remise en service du système de reproduction et de ses moyens de paiement s'effectue également par la télécommande, soit par la même touche, soit par une touche différente.

Une deuxième fonction de la télécommande est de pouvoir créditer le système de reproduction audiovisuelle d'une valeur correspondant à la sélection d'au moins une chanson. Le nombre maximum de crédits alloués par cette fonction est mémorisé sur les moyens de mémorisation du système de reproduction. Ce nombre est mis à jour chaque fois que la deuxième fonction est utilisée et chaque fois qu'un opérateur modifie la valeur de ce nombre. Cette deuxième fonction permet, par exemple, au gérant du bar où est installé un système de reproduction audiovisuelle muni de la télécommande selon l'invention, d'offrir au moins une sélection à ses clients, sans se déplacer jusqu'au système de reproduction et sans effectuer de manipulations complexes.

On conçoit que la télécommande est plus facile à utiliser puisqu'il n'est pas nécessaire de la diriger vers le système de reproduction audiovisuelle. De plus, il est possible de la fixer, par exemple, au bar, ce qui permet d'éviter la perte ou la détérioration de la télécommande. Le mode apprentissage des codes permet d'éviter d'avoir à associer, en cours de fabrication en usine, une télécommande avec un système de reproduction, ce qui simplifie les gestions de stock. Les fonctions supplémentaires de la télécommande simplifient également l'utilisation du système de reproduction audiovisuelle.

## Revendications

1. Installation de reproduction audiovisuelle numérique, comprenant une pluralité de juke-boxes, dans lequel chaque juke-box comporte un microprocesseur, des moyens pour stocker des informations audiovisuelles pouvant être reproduites par le juke-box en réponse à des requêtes d'utilisateur, un système audio (5, 53, 54) pour produire des sons, un système vidéo (6, 62) pour afficher images vidéo, et un système de communication (4, 41) permettant au juke-box de communiquer avec un réseau de distribution d'informations audiovisuelles contrôlé par un serveur distant, le serveur et le juke-box communiquant l'un avec l'autre via le réseau de distribution, le serveur fournissant des services au juke-box, **caractérisée en ce que** le système de reproduction audiovisuelle comprend une pluralité de télécommandes pour contrôler chacune une pluralité de fonctions d'un juke-box, chacune des télécommandes comprenant un émetteur distant de radiofréquence associé à un récepteur (51) de radiofréquence connecté à un circuit (5) de commande du son d'un juke-box et étant agencée pour contrôler un des juke-boxes uniquement lorsque le juke-box reconnaît un code de contrôle incluant un code d'identification transmis par la télécommande et **en ce que** au moins un juke-box est agencé pour stocker le code d'identification et utiliser ce dernier lors d'une comparaison, faite avec le code d'identification inclus dans un code de contrôle transmis par la télécommande ou le serveur via le réseau de distribution, pour déterminer si le juke-box va répondre ou non aux codes de contrôle émis par la télécommande, la télécommande comprenant une touche spécifique qui déclenche, lorsqu'elle est activée, un signal comprenant uniquement le code d'identification pour permettre au juke-box de stocker facilement le code d'identification lors de la première utilisation de la télécommande, chacun des juke-boxes étant doté d'un mode d'apprentissage prévu pour permettre d'une part la reconnaissance du code d'identification émis par une télécommande lorsque la touche spécifique est activée, et d'autre part le stockage de ce code d'identification par le juke-box.

2. Installation selon la revendication 1, **caractérisée en ce que** la télécommande est dotée d'un moyen de neutraliser ou de mettre en service le système de reproduction audiovisuelle et ses moyens (35) de paiement.

3. Installation selon la revendication 2, **caractérisée en ce que** chaque juke-box est agencé pour que la neutralisation des moyens (35) de paiement entraîne l'affichage d'un message personnalisable sur des moyens de visualisation (62) du juke-box.

4. Installation selon l'une des revendications 1 à 3, **caractérisée en ce que** la télécommande est dotée d'un moyen de comptabilisation pour allouer un nombre de crédits et permettre de créditer le système de reproduction audiovisuelle d'un crédit correspondant à la sélection d'au moins une chanson, le nombre maximum de crédits étant mémorisé sur les moyens de mémorisation du système de reproduction.

## Claims

1. Digital audio-visual reproduction installation, comprising a plurality of juke-boxes, in which each juke-box comprises a microprocessor, it being possible for the juke-box to play means for storing audio-visual information in response to user requests, an audio system (5, 53, 54) for producing sounds, a video system (6, 62) for displaying video images, and a communication system (4, 41) allowing the juke-box to communicate with an audio-visual information distribution network controlled by a remote server, the server and the juke-box communicating with one another via the distribution network, the server providing services to the juke-box, **characterised in that** the audio-visual reproduction system comprises a plurality of remote controls, each controlling a plurality of juke-box functions, each of the remote controls comprising a remote radio-frequency transmitter associated with a radio-frequency receiver (51) connected to a circuit (5) for controlling the sound of a juke-box and being arranged so as to control one of the juke-boxes only when the juke-box recognises a check code including an identification code transmitted by the remote control and **in that** at least one juke-box is arranged so as to store the identification code and to use the latter when a comparison is made with the identification code included in a check code transmitted by the remote control or the server via the distribution network, in order to determine whether or not the juke-box will respond to the check codes sent by the remote control, the remote control comprising a specific key which, when activated, triggers a signal comprising only the identification code in order to allow the juke-box to store the identification code easily when the remote control is first used, each of the juke-boxes being provided with a training mode designed to permit, on the one hand, the recognition of the identification code sent by a remote control when the specific key is activated and, on the other hand, the storage of this identification code by the juke-box.

2. Installation according to Claim 1, **characterised in that** the remote control is provided with a means for neutralising or starting up the audio-visual reproduction system and its payment means (35).

3. Installation according to Claim 2, **characterised in that** each juke-box is arranged so that the neutralisation of the payment means (35) leads to a customisable message being displayed on the display means (62) of the juke-box.

4. Installation according to one of Claims 1 to 3, **characterised in that** the remote control is provided with an accounting means in order to allocate a number of credits and to make it possible to credit the audio-visual reproduction system with a credit corresponding to the selection of at least one song, the maximum number of credits being stored on the storage means of the reproduction system.

## Patentansprüche

1. Vorrichtung zur digitalen audiovisuellen Wiedergabe, mit mehreren Abspielautomaten, wobei jeder Abspielautomat einen Mikroprozessor, Einrichtungen zum Speichern von audiovisuellen Informationen, die vom Abspielautomaten als Antwort auf Anfragen eines Benutzers wiedergegeben werden können, ein Audiosystem (5, 53, 54) zum Erzeugen von Tönen, ein Videosystem (6, 62) zum Zeigen von Videobildern und ein Kommunikationssystem (4, 41) aufweist, das es dem Abspielautomaten erlaubt, mit einem Verteilungsnetzwerk für audiovisuelle Informationen zu kommunizieren, das von einem entfernt gelegenen Server gesteuert wird, wobei der Server und der Abspielautomat miteinander über das Verteilungsnetzwerk kommunizieren und der Server Dienste an den Abspielautomaten liefert, **dadurch gekennzeichnet, dass** das System zur audiovisuellen Wiedergabe mehrere Fernbedienungen zum Ansteuern einer von mehreren Funktionen eines Abspielautomaten aufweist, wobei jede Fernbedienung einen Fernsender mit Radiofrequenz aufweist, der einem Empfänger (51) mit Radiofrequenz zugeordnet ist, welcher mit einer Tonsteuerschaltung eines Abspielautomaten verbunden ist und betätigt wird, um einen einzigen Abspielautomaten zu steuern, wenn der Abspielautomat einen von der Fernbedienung übermittelten Steuercode, der einen Identifikationscode einschließt, erkennt, und dass zumindest ein Abspielautomat eingerichtet ist, um den Identifikationscode zu speichern und diesen für einen Vergleich mit dem in dem Steuercode enthaltenen Identifikationscode zu verwenden, der von der Fernbedienung oder dem Server über das Verteilungsnetz übermittelt wurde, um zu bestimmen, ob der Abspielautomat auf die von der Fernbedienung übermittelten Steuercodes antworten soll oder nicht, wobei die Fernbedienung eine spezielle Taste aufweist, die, wenn sie betätigt wird, ein Signal abgibt, das einzig den Identifikationscode enthält, damit der Abspielautomat leicht den Identifikationscode während der ersten Benutzung der Fernbedienung speichern kann, wobei jeder Abspielautomat mit einem Lehrmodus ausgerüstet ist, damit einerseits die Wiedererkennung des von einer Fernbedienung abgesendeten Identifikationscodes beim Betätigen der speziellen Taste und andererseits das Speichern dieses Identifikationscodes durch den Abspielautomat ermöglicht wird.

2. Vorrichtung nach Anspruch 1, **dadurch gekennzeichnet, dass** die Fernbedienung mit einer Einrichtung zum Abschalten oder Einschalten des Systems zur audiovisuellen Wiedergabe und dessen Bezahleinrichtung (35) versehen ist.

3. Vorrichtung nach Anspruch 2, **dadurch gekennzeichnet, dass** jeder Abspielautomat eingerichtet ist, dass das Abschalten der Bezahleinrichtung (35) die Anzeige einer personalisierbaren Meldung auf einer Anzeigeeinrichtung (62) des Abspielautomaten zur Folge hat.

4. Vorrichtung nach einem der Ansprüche 1 bis 3, **dadurch gekennzeichnet, dass** die Fernbedienung mit einer Buchungseinrichtung versehen ist, um eine Anzahl von Gutschriften zuzuteilen und es zu erlauben, dem System zur audiovisuellen Wiedergabe eine Gutschrift entsprechend der Auswahl zumindest eines Liedes gutzuschreiben, wobei die maximale Anzahl der Gutschriften in einer Speichereinrichtung des Wiedergabesystems gespeichert wird.
